# EUROPEAN PATENT SPECIFICATION

(11) **EP 2 493 263 B1**
(45) Date of publication and mention of the grant of the patent: **25.06.2014**
(21) Application number: 12168933.5
(22) Date of filing: 31.07.2008
(51) Int. Cl.: H05B 6/64, B65D 81/34, A47J 36/02

(54) **Microwave heating construct**
Mikrowellenerwärmungskonstrukt
Construction de chauffage à micro-ondes

(43) Date of publication of application: 29.08.2012
(62) Divisional of application: 08305440.3
(73) Proprietor: Graphic Packaging International, Inc., Marietta, GA 30067 (US)
(72) Inventor: Talpaert, Arnaud, 59258 Lesdain (FR)
(74) Representative: Desormiere, Pierre-Louis

(56) References cited:
- GB-A- 2 368 507
- US-A1- 2008 099 474
- US-A1- 2008 149 627
- US-B1- 6 359 272

## Description

### BACKGROUND

There is a continuing need for an improved construct or apparatus for heating, browning, and/or crisping a food item in a microwave oven.

### SUMMARY

The present disclosure is directed generally to a construct or apparatus for heating, browning, and/or crisping a food item, for example, in a microwave oven, and a blank for forming such a construct. Accordingly, the construct and/or blank may include one or more microwave energy interactive elements that alter the effect of microwave energy on the food item, for example, a susceptor, a microwave energy shielding element, and/or a microwave energy distributing element.

The construct generally includes a plurality of adjoined panels arranged to define a cavity or interior space for receiving a food item. In one example, the construct comprises a top panel and a bottom panel in a substantially opposed, facing relationship, and a pair of side panels in a substantially opposed, facing relationship. The side panels are joined to the top panel and the bottom panel to define a sleeve having an interior space. The top panel includes a movable portion, for example, defined by one or more slits in the top panel. The remaining portion of the top panel is a marginal portion that may at least partially circumscribe the movable portion. A susceptor may overlie at least a portion of the movable portion facing the interior space. The construct also may include a cross member that extends at least partially across the movable portion. The cross member is adapted to urge the movable portion away from the plane of the marginal portion towards the interior space to enhance heating, browning, and/or crisping of the food item. If desired, the cross member also may serve as a handle for the construct.

Other features, aspects, and embodiments of the invention will be apparent from the following description, accompanying figures, and appended claims.

Document US6359272 discloses a microwave cooking package and tray suitable for cooking food. The package and tray comprise a laminate structure comprising a lid, susceptor layer upon a backing material, and a plurality of apertures through the laminate structure.

### BRIEF DESCRIPTION OF THE DRAWINGS

The description refers to the accompanying drawings in which like reference characters refer to like parts throughout the several views, and in which:

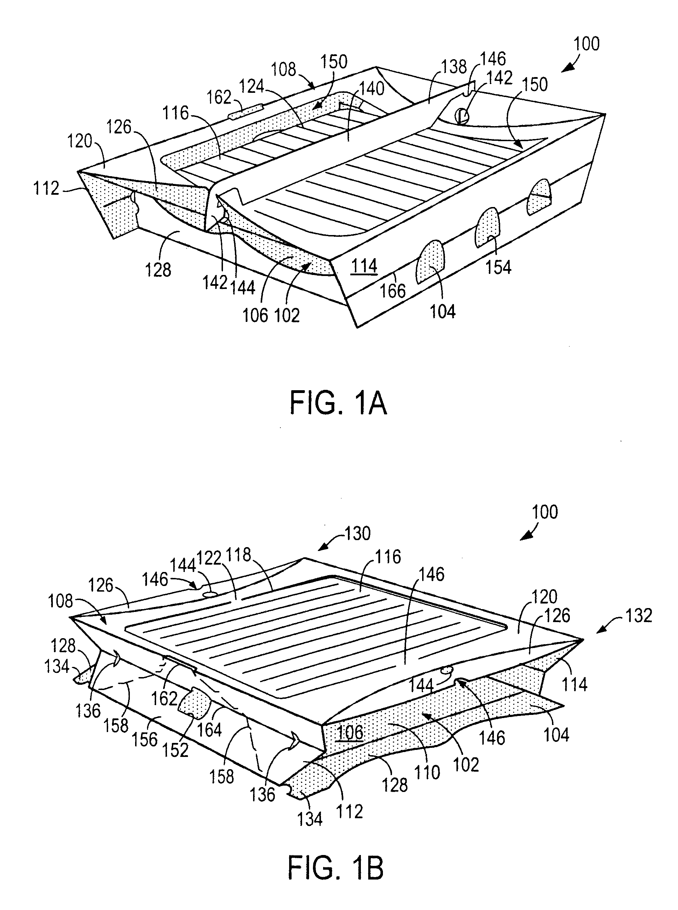

**FIG. 1A** is a schematic perspective view of an exemplary construct or apparatus for heating, browning, and/or crisping a food item in a microwave oven;
**FIG. 1B** is a schematic perspective view of the construct of **FIG. 1A****,** in a partially erected configuration;

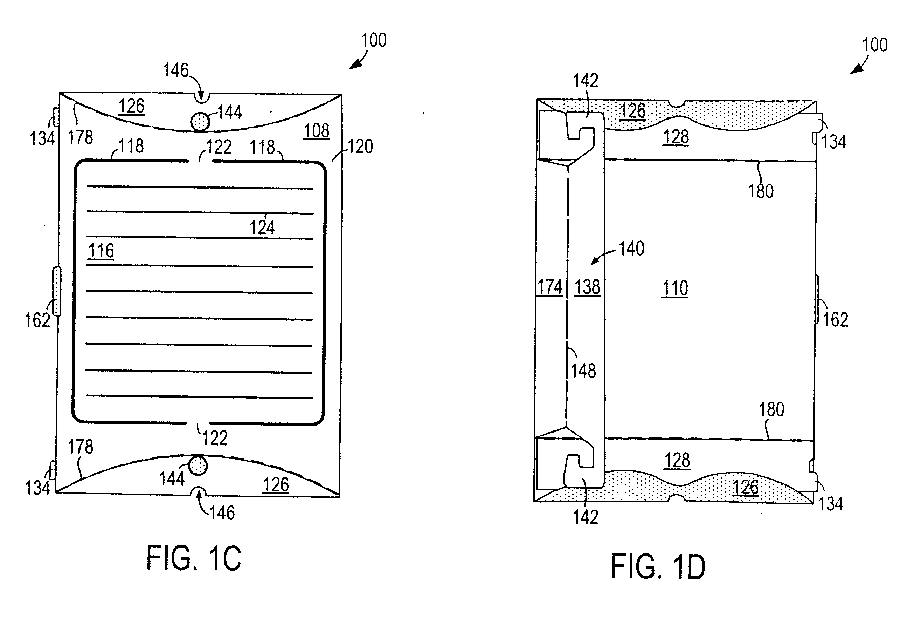

**FIG. 1C** is a schematic top plan view of the construct of **FIG. 1B****;**
**FIG. 1D** is a schematic bottom plan view of the construct of **FIG. 1B****;**

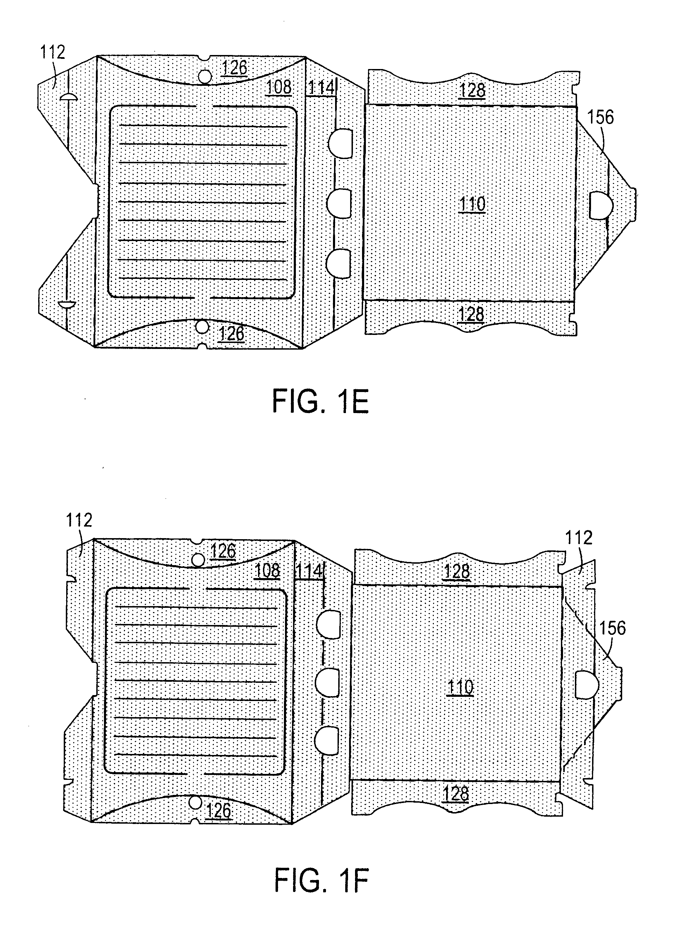

**FIGS. 1E** and **1F** are schematic plan views of the construct in an opened configuration; and

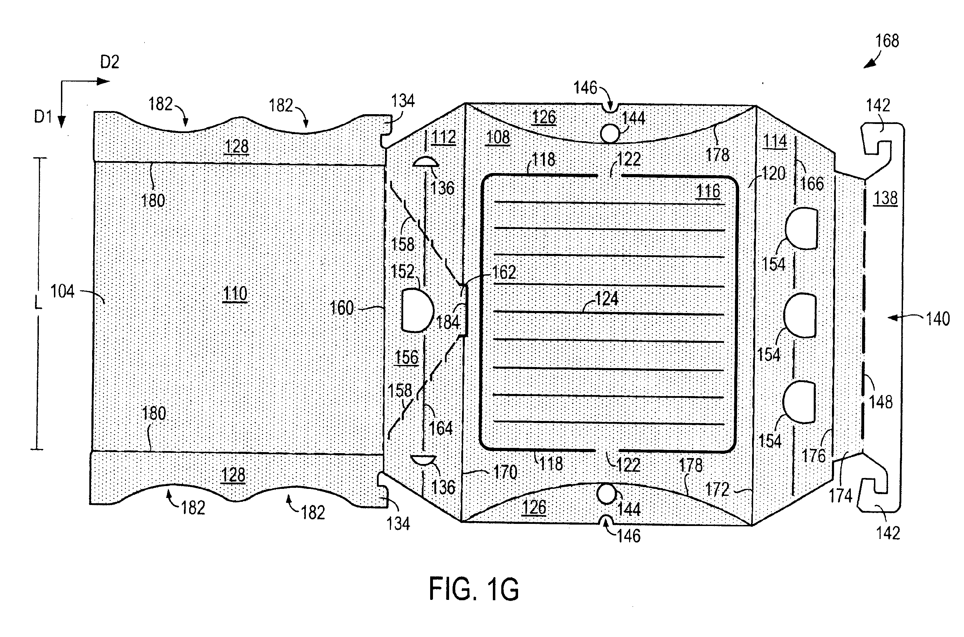

**FIG. 1G** is a schematic top plan view of a blank that may be used to form the construct of **FIGS. 1A-1D****.**

### DESCRIPTION

Various aspects of the disclosure may be illustrated by referring to the figures. For purposes of simplicity, like numerals may be used to describe like features. It will be understood that where a plurality of similar features are depicted, not all of such features necessarily are labeled on each figure. Although several different exemplary aspects, implementations, and embodiments are provided, numerous interrelationships between, combinations thereof, and modifications of the various inventions, aspects, implementations, and embodiments are contemplated hereby.

**FIGS. 1A-1D** schematically depict a construct or apparatus **100** for heating, browning, and/or crisping a food item in a microwave oven. The construct **100** generally includes a plurality of adjoined panels (discussed below) and an interior space or cavity **102** for receiving a food item (not shown), for example, a sandwich. A microwave energy interactive element **104,** for example, a susceptor (schematically shown with stippling throughout the various figures), may overlie any of the various panels and/or at least partially define an interior surface **106** of the construct **100** facing the cavity **102.** The construct **100** may be used to heat, brown, and/or crisp any suitable food item, for example, a sandwich, breaded meat item, or pastry. **FIG. 1B** schematically depicts the construct or apparatus **100** in a partially erected configuration. **FIGS. 1C** and **1D** schematically respectively illustrate top and bottom plan views of the partially erected construct **100** of **FIG. 1B** in a substantially flattened state.

Now viewing **FIGS. 1A-1D** in further detail, the construct **100** includes a first pair of opposed panels (e.g., major panels) including a top panel **108** and a bottom panel **110,** and a second pair of opposed panels (e.g., minor panels) including a first side panel **112** and a second side panel **114** that collectively define a sleeve having the interior space or cavity **102.**

The top panel **108** includes a movable portion or "grilling" flap **116** defined by a pair of opposed cut lines or slits **118** having a somewhat square U-shape (generally referred to as U-shaped hereinafter). The flap **116** is pivotably joined to the remainder **120** of the top panel **108** (i.e., the marginal portion **120** of the top panel **108)** at attachment areas **122** that serve as flex or pivot points or areas for the flap **116.** In this example, the movable portion **116** is substantially centered in the top panel **108** such that the marginal portion of the top panel **108** at least partially circumscribes the movable portion **116.** However, other shapes and configurations of the movable portion and marginal portion are contemplated. If desired, the flap **116** may include a plurality of score lines **124** that may define grill lines or marks on an adjacent food item, as will be discussed further below.

Still viewing **FIGS. 1A-1D****,** a pair of top end panels **126** are foldably joined to opposite ends of the top panel **108.** Likewise, a pair of bottom end panels **128** are foldably joined to opposite ends of the bottom panel **110.** In the partially erected configuration shown in **FIG. 1B****,** the top end panels **126** and respective bottom end panels **128** are in a substantially opposed, facing relationship with one another at opposed ends **130, 132** of the construct **100.** With the ends **130, 132** in this open configuration, the food item to be heated, browned, and/or crisped may be inserted into the interior space **102.** Alternatively, the food item may be inserted into the construct **100** at any other suitable time, for example, as the construct **100** is being erected from a blank **168** (discussed in connection with **FIG. 1F****)**.

When the food item is inside the construct **100,** the bottom end panels **128** may be folded towards the interior space **102** to at least partially "close" the ends **130, 132** of the construct **100,** as shown in **FIG. 1A****.** The bottom end panels **128** each include a locking projection **134** adapted to be received within a respectively adjacent aperture **136** in the first side panel **112** (best seen in **FIG. 1A****)** to maintain the bottom end panels **128** in a substantially upright "closed" configuration. While one example is shown in the figures, it will be understood that any type of locking feature may be used to secure the bottom end panels **128** in an upright configuration, and such features may be included in the end panels **128,** the side panels **112, 114,** or any suitable combination thereof.

The apparatus **100** may be provided with a cross member **138 (****FIGS. 1A****,** **1D****),** which, in some embodiments, also may serve as a handle for the construct **100.** The cross member **138** generally has a central or major portion **140** adapted to extend at least partially across the movable portion or grill flap **116,** and pair of locking projections **142** at opposed ends of the cross member **138** adapted to be received within respective apertures **144** in the top end panels **126.** If desired, each of the top end panels **126** may include a respective notch **146** to assist with maintaining the cross member **138** in a substantially straight and/or centered position between the sides (i.e., side panels **112, 114)** of the construct **100,** as shown in **FIG. 1A****.**

The cross member **138** may be provided as a removably attached portion of the construct **100,** for example, as shown in **FIG. 1D****,** with the cross member **138** being joined to the remainder of the construct **100** along a line of separation or weakening (e.g., a tear line **148).** In this example, the cross member **138** is in a facing, substantially contacting relationship with the bottom panel **110.** However, the cross member **138** may be removably attached at any suitable location. As another example, the cross member **138** may be removably joined to the remainder of the construct **100** using an adhesive, for example, an adhesive dot or strip (not shown). Alternatively, the cross member **138** may be provided with, but separately from, the remainder of the construct **100.**

To install the cross member **138** according to one acceptable method, the top end panels **126** may be urged upwardly and the locking projections **142** of the cross member **138** may be inserted into the respective apertures **144.** In doing so, the major (i.e., central) portion **140** of the cross member **138** engages and urges the grill flap **116** away from the plane of the peripheral portion of the top panel **108** towards, and in some instances, into proximate or intimate contact with, the food item (not shown) in the cavity **102.** As a further result, venting gaps **150** are formed between the grill flap **116** and the peripheral margin of the top panel **108** along slits **118 (****FIG. 1A****).** The venting gaps **150** may allow the passage of moisture away from the food item during the heating cycle, thereby enhancing browning and/or crisping of the food item. Further, one or both of the side panels **112, 114** also may be provided with respective venting apertures **152, 154 (****FIGS. 1A, 1B****)** to transport moisture away from the food item during heating.

Upon sufficient exposure to microwave energy, the susceptor **104** tends to convert at least a portion of the impinging microwave energy into thermal energy, which then can be transferred to the surface of the food item to enhance surface browning and/or crisping. The score lines **124** in the movable portion or "grilling" flap **116** may provide grill-type browning marks on the upper surface of the food item.

After heating, the food item may be removed from the microwave oven by grasping the cross member **138,** which may be designed to be substantially transparent microwave energy so that it remains substantially cool to the touch after exposure to microwave energy. The food item then may be retrieved from the interior space **102** by removing the cross member **138** and/or opening one or both ends **130, 132** of the construct **100,** for example, by removing the locking projections **142** from the respective apertures **144,** and folding the bottom end panels **128** away from the cavity **102,** or by any other suitable method.

If desired, the construct **100** may include one or more features that facilitate removal of the food item from the cavity **102.** For example, as best seen in **FIG. 1B****,** the construct **100** may include an access panel **156** that may be used to transform the construct **100** from an erected condition to a substantially open condition. In this example, the access panel **156** is defined by a pair of lines of disruption **158** in the first side panel **112** that extend divergently substantially from the top panel **108** towards the bottom panel **110** (or extend convergently from the bottom panel **110** towards the top panel **108).** However, the access panel **156** may have any other shape or may be located in any other suitable location, as desired. If desired, the construct **100** may include a grasping feature, for example, a tab **162,** extending from the access panel **156** to assist with initiating the separation of the access panel **156** from the remainder of the construct **100.** The tab **162** may have any suitable shape.

In some embodiments, the construct **100** may include additional lines of weakening that facilitate opening of the construct **100.** By way of example, in the illustrated embodiment, the construct **100** includes a line of disruption **158** joining the first side panel **112** to the bottom panel **110.** At least a portion of the line of disruption **160,** for example, at least the respective portions extending from the line of disruption **158** towards the ends **130, 132** of the construct **100** may include one or more cut lines. In doing so, when the access panel **156** is separated from the remainder of the first side panel **112,** tearing may continue along line of disruption **160** until the ends **130, 132** are reached. As a result, the construct **100** may be completely opened into a somewhat flattened structure, as shown in **FIG. 1E****.**

While one example of an unerected construct is shown in **FIG. 1E****,** it will be appreciated that the precise manner in which the construct **100** is opened is not critical to the invention. For example, in some embodiments, the first side panel **112** and, optionally, the second side panel **114,** may include respective lines of weakening (e.g., tear lines) **164, 166 (****FIGS. 1A, 1B****)** that allow the construct **100** to be collapsed into a flattened configuration and/or to accommodate the shape of the food item. In such embodiments, such lines of weakening, for example, line of weakening **164** in the first side panel **112,** also may facilitate opening of the construct **100** via the access panel **156.** By way of example, **FIG. 1F** schematically illustrates the construct **100** in a fully open configuration after tearing along tear lines **158** and line of disruption **164.**

**FIG. 1G** is a plan view of a blank **168** that may be used to form the construct **100** of **FIGS. 1A-1E****.** The blank **168** generally includes a plurality of adjoined panels, each of which has a first dimension, for example, a length, extending in a first direction, for example, a longitudinal direction, **D1,** and a second dimension, for example, a width, extending in a second direction, for example, a transverse direction, **D2.** It will be understood that such designations are made only for convenience and do not necessarily refer to or limit the manner in which the blank **168** is manufactured or erected into a construct or apparatus.

Generally viewing **FIG. 1G** from left to right, the blank **168** includes a first major panel **110** joined to a first minor panel **112** along a longitudinal fold line **160.** The first minor panel **112** is joined to a second major panel **108** along a longitudinal fold line **170,** which in turn, is joined to a second minor panel **114** along a longitudinal fold line **172.** The second minor **114** panel is joined to an attachment panel **174** along a longitudinal fold line **176,** which in turn is joined to a detachable cross member panel or cross member **138** along a longitudinal line of disruption **148,** which in this example, comprises a plurality of spaced apart cut lines. The cross member panel **138** includes a central portion **140** adjacent to fold line **148** and a pair of opposed locking features **142** extending from opposite longitudinal ends of the cross member panel **138.** The attachment panel **174** has a length **L** approximately equal to the length **L** of the first major panel **110.** In this example, the minor panels **112, 114** and attachment panel **174** are substantially trapezoidal in shape. However, other shapes are contemplated.

The second major panel **108** includes a movable portion **116** defined by a pair of opposed cut lines or slits **118.** The movable portion **116** is joined to the marginal portion (i.e., the remainder) of the second major panel **108** at attachment areas **122.** The movable portion **116** includes a plurality of score lines **124** extending transversely between, but typically not abutting, slits **118.**

Still viewing **FIG. 1G****,** the blank **168** includes a pair of end panels **126** joined to opposite (i.e., opposed) ends of the second major panel **112** along respective substantially arcuate, opposed fold lines **178.** Each end panel **126** includes a substantially circular aperture **144** proximate to the midpoint or middle of the respective arcuate fold line **178,** substantially aligned with attachment areas **122** of the movable portion **116** of the second major panel **108.** Each aperture **144** is adapted to received the respectively adjacent locking feature **142** of the cross member **138** when the blank **168** is formed into a construct **100 (****FIG. 1A****).** Further, each end panel **126** may include a substantially arcuate notch **146** along the outermost edge of the end panel **126** substantially aligned in the longitudinally direction with the respective aperture **144** (and with attachment areas **122).** When the cross member **138** is installed, the notches **146** assist with maintaining the handle **138** in a substantially upright configuration with respect to the grilling flap **116,** as shown in **FIG. 1A****.**

A pair of end panels **128** is joined to opposite (i.e., opposed) ends of the first major panel **110** along respective transverse fold lines **180.** Each end panel **128** extends generally in the transverse direction and includes a pair of inwardly arcuate cutouts or curved edge sections **182.** Each end panel **128** also includes a locking projection **134** that extends toward the first minor panel **112.** Each locking projection **134** is adapted to be received within a respective somewhat D-shaped locking aperture **136** in the first minor panel **112.** The flat side of each locking aperture **136** is substantially aligned with the respectively adjacent transverse fold lines **180.**

The first minor panel **112** and the second minor panel **114** each include respective venting apertures **152, 154.** In this example, the apertures **152, 154** are substantially D-shaped with the rounded side of the apertures **152, 154** facing the second major panel **108** and the flattened side of the apertures **152, 154** substantially parallel to and adjacent to the respective longitudinal fold lines **160, 176.** The first minor panel **112** and the second minor panel **114** also include a respective longitudinal line of disruption **164, 166** extending substantially along the length of the respective minor panel **112, 114,** interrupted by the respective venting apertures **152, 154.**

The first minor panel **112** also includes a pair of lines of disruption (e.g. tear lines or cut lines) **158** that extend divergently from a somewhat square U-shaped slit **184** in the second major panel **108** and terminate substantially proximate to fold line **160.** The slit defines a tab **162** that is struck from the second major panel **108** when the blank **168** is formed into a construct **100,** as shown in **FIGS. 1B****,** **1C, 1D**. In this example, the lines of disruption **158** are "zipper" type tear lines (i.e., a plurality of cut lines, each of which includes a substantially linear portion and an oblique portion extending from the respective linear portion). However, other types of tear lines or cut lines may be used. Further, it will be understood that although the illustrated example includes particular types of lines of weakening or disruption in particular portions of the blank and/or construct, the various other panels of the blank and/or construct may include such lines of weakening and/or numerous other features that facilitate manufacture, assembly, use, and/or opening of the construct.

A microwave energy interactive element, for example, a susceptor **104** (schematically illustrated with stippling) overlies at least a portion of one side of the blank **168,** for example, a first side of the blank **168** intended to become the interior side or surface **106** of the construct **100 (****FIGS. 1A-1D****)** formed from the blank **168.** In this example, the susceptor **104** overlies the entire blank **168** except the cross member or handle panel **138,** so that when the cross member **138** is used as a handle, the handle **138** remains substantially cool, even after exposure to microwave energy. However, it is contemplated that other areas that would be desirable to remain cool and/or areas not needed for browning and/or crisping may be provided without a susceptor. For example, in some embodiments, end panels **126** and/or tab **162** may be provided without a susceptor.

To form the construct **100** from the blank **168** according to one exemplary method, the blank **168** may be folded along longitudinal fold lines **160, 170, 172, 176,** and major panel **110** may be brought into a superposed configuration with major panel **108.** The attachment panel **174** and cross member panel **138** then may be brought into an overlapping, substantially contacting relationship with the second side (i.e. exterior side) of major panel **110 (****FIG. 1D****).** The attachment panel **174** then may be joined to the major panel **110** using any suitable adhesive, thermal, or mechanical technique or mechanism, leaving the cross member **138** free to be separated from the attachment panel **174** along line of disruption **148 (****FIG. 1D**). If desired, the construct **100** may be folded along fold lines **164, 166** to allow the construct **100** to be somewhat compressed or flattened, as shown in **FIG. 1****B.**

Numerous materials may be suitable for use in forming the various blanks and constructs (e.g. trays) of the invention, provided that the materials are resistant to softening, scorching, combusting, or degrading at typical microwave oven heating temperatures, for example, from about 250°F to about 425°F. Such materials may include microwave energy interactive materials and microwave energy transparent or inactive materials.

The microwave energy interactive material(s) may be used to form one or more microwave energy interactive elements or features that alter the effect of microwave energy on the adjacent food item. Each microwave energy interactive element comprises one or more microwave energy interactive materials or segments arranged in a particular configuration to absorb microwave energy, transmit microwave energy, reflect microwave energy, or direct microwave energy, as needed or desired for a particular microwave heating construct and food item. The microwave energy interactive element may be configured to promote browning and/or crisping of a particular area of the food item, to shield a particular area of the food item from microwave energy to prevent scorching or overheating, or to transmit microwave energy towards or away from a particular area of the food item.

In the illustrated example, the blank **168** includes a susceptor **104** substantially overlying and joined to at least a portion of the blank **168** that forms or defines at least a portion of a first surface **106,** which may serve as a food-contacting or food bearing surface in proximate or intimate contact with the food item. If desired, a second surface opposite the first surface (i.e., the exterior surface) also may inc**l**ude one or more microwave energy interactive elements.

The susceptor generally comprises a thin layer of microwave energy interactive material (generally less than about 100 angstroms in thickness, for example, from about 60 to about 100 angstroms in thickness) that tends to absorb at least a portion of impinging microwave energy and convert it to thermal energy (i.e., heat) at the interface with the food item. Susceptor elements often are used to promote browning and/or crisping of the surface of a food item. However, other microwave energy interactive elements, such as those described herein, are contemplated for use with the invention.

For example, the microwave energy interactive element may comprise a foil having a thickness sufficient to shield one or more selected portions of the food item from microwave energy. Such "shielding elements" may be used where the food item is prone to scorching or drying out during heating.

The shielding element may be formed from various materials and may have various configurations, depending on the particular application for which the shielding element is used. Typically, the shielding element is formed from a conductive, reflective metal or metal alloy, for example, aluminum, copper, or stainless steel. The shielding element generally may have a thickness of from about 0.000285 inches to about 0.05 inches. In one example, the shielding element may have a thickness of from about 0.0003 inches to about 0.03 inches. In another example, the shielding element may have a thickness of from about 0.00035 inches to about 0.020 inches, for example, about 0.016 inches.

As still another example, the microwave energy interactive element may comprise a segmented foil, such as, but not limited to, those described in U.S. Patent Nos. 6,204,492, 6,433,322, 6,552,315, and 6,677,563. Although segmented foils are not continuous, appropriately spaced groupings of such segments may act as a shielding element. Such foils also may be used in combination with susceptor elements and, depending on the configuration and positioning of the segmented foil, the segmented foil may operate to direct microwave energy (e.g., to the center of the bottom of a food item or to any other desired location) and promote heating rather than to shield microwave energy.

If desired, any of the numerous microwave energy interactive elements described herein or contemplated hereby may be substantially continuous, that is, without substantial breaks or interruptions, or may be discontinuous, for example, by including one or more microwave energy transparent areas or apertures that transmit microwave energy therethrough. Such areas may be sized and positioned to heat particular areas of the food item selectively. The areas may extend through the entire structure, or only through one or more layers. The number, shape, size, and positioning of such microwave energy transparent areas may vary for a particular application depending on type of construct being formed, the food item to be heated therein or thereon, the desired degree of shielding, browning, and/or crisping, whether direct exposure to microwave energy is needed or desired to attain uniform heating of the food item, the need for regulating the change in temperature of the food item through direct heating, and whether and to what extent there is a need for venting.

It will be understood that each microwave energy transparent area may be a physical aperture or void in one or more layers or materials used to form the construct, or may be a non-physical "aperture". A non-physical aperture is a microwave energy transparent area that allows microwave energy to pass through the structure without an actual void or hole cut through the structure. Such areas may be formed by simply not applying a microwave energy interactive material to the particular area, or by removing microwave energy interactive material in the particular area, or by chemically and/or mechanically deactivating the microwave energy interactive material in the particular area, as described in U.S. Patent No. 4,865,921. While both physical and non-physical apertures allow the food item to be heated directly by the microwave energy, a physical aperture also provides a venting function to allow steam or other vapors to escape from the interior of the construct.

The arrangement of microwave energy interactive and microwave energy transparent areas may be selected to provide various levels of heating, as needed or desired for a particular application. For example, where greater heating is desired, the total inactive area may be increased. In doing so, more microwave energy is transmitted to the food item. Alternatively, by decreasing the total inactive area, more microwave energy is absorbed by the microwave energy interactive areas, converted into thermal energy, and transmitted to the surface of the food item to enhance browning and/or crisping.

In some instances, it may be beneficial to create one or more discontinuities or inactive regions to prevent overheating or charring of the construct. By way of example, and not limitation, in the construct **100** illustrated in **FIGS. 1A-1D****,** the attachment panel **174** is an overlapping relationship with major panel **110**. When exposed to microwave energy, the concentration of heat generated by the overlapped panels may be sufficient to cause the underlying support, in this case, paperboard, to become scorched. As such, the overlapping portions of one or both of panels **110, 174** may be designed to be microwave energy transparent, for example, by forming these areas of the blank **168** without a microwave energy interactive material, by removing any microwave energy interactive material that has been applied, or by deactivating the microwave energy interactive material in these areas.

Further still, one or more panels, portions of panels, or portions of the construct may be designed to be microwave energy inactive to ensure that the microwave energy is focused efficiently on the areas to be browned and/or crisped, rather than being lost to portions of the food item not intended to be browned and/or crisped or to the heating environment. This may be achieved using any suitable technique, such as those described above. By way of example, and not limitation, in the illustrated example, the top end panels **126** are in a substantially vertical configuration extending upwardly away from the interior space **102** in which the food item is heated. In this configuration, the top end panels **126** are not likely to be in proximate or intimate contact with any portion of the food item intended to be browned and/or crisped. Likewise, tab **162** may be made to be microwave energy transparent if desired.

If desired, the microwave energy interactive element may be supported on a microwave inactive or transparent substrate, for example, a polymer film or other suitable polymeric material, for ease of handling and/or to prevent contact between the microwave energy interactive material and the food item. As used herein the term "polymer" or "polymeric material" includes, but is not limited to, homopolymers, copolymers, such as for example, block, graft, random, and alternating copolymers, terpolymers, etc. and blends and modifications thereof. Furthermore, unless otherwise specifically limited, the term ``polymer" shall include all possible geometrical configurations of the molecule. These configurations include, but are not limited to isotactic, syndiotactic, and random symmetries.

Examples of polymer films that may be suitable include, but are not limited to, polyolefins, polyesters, polyamides, polyimides, polysulfones, polyether ketones, cellophanes, or any combination thereof. Other non-conducting substrate materials such as paper and paper laminates, metal oxides, silicates, cellulosics, or any combination thereof, also may be used.

In one particular example, the polymer film comprises polyethylene terephthalate. Examples of polyethylene terephthalate films that may be suitable for use as the substrate include, but are not limited to, MELINEX^{®}, commercially available from DuPont Teijan Films (Hopewell, Virginia), and SKYROL, commercially available from SKC, Inc. (Covington, Georgia). Polyethylene terephthalate films are used in commercially available susceptors, for example, the QWIKWAVE^{®} Focus susceptor and the MICRORITE^{®} susceptor, both available from Graphic Packaging International (Marietta, Georgia).

The thickness of the film generally may be from about 35 gauge to about 10 mil. In each of various examples, the thickness of the film may be from about 40 to about 80 gauge, from about 45 to about 50 gauge, about 48 gauge, or any other suitable thickness.

The microwave energy interactive material may be applied to the substrate in any suitable manner, and in some instances, the microwave energy interactive material is printed on, extruded onto, sputtered onto, evaporated on, or laminated to the substrate. The microwave energy interactive material may be applied to the substrate in any pattern, and using any technique, to achieve the desired heating effect of the food item.

For example, the microwave energy interactive material may be provided as a continuous or discontinuous layer or coating including circles, loops, hexagons, islands, squares, rectangles, octagons, and so forth. Examples of various patterns and methods that may be suitable are provided in U.S. Patent Nos. 6,765,182; 6,717,121; 6,677,563; 6,552,315; 6,455,827; 6,433,322; 6,414,290; 6,251,451; 6,204,492; 6,150,646; 6,114,679; 5,800,724; 5,759,422; 5,672,407; 5,628,921; 5,519,195; 5,424,517; 5,410,135; 5,354,973; 5,340,436; 5,266,386; 5,260,537; 5221,419; 5,213,902; 5,117,078; 5,039,364; 4,963,424; 4,936,935; 4,890,439; 4,775,771; 4,865,921; and Re. 34,683. Although particular examples of patterns of microwave energy interactive material are shown and described herein, it should be understood that other patterns of microwave energy interactive material are contemplated by the present disclosure.

The microwave energy interactive material may be an electroconductive or semiconductive material, for example, a metal or a metal alloy provided as a metal foil; a vacuum deposited metal or metal alloy; or a metallic ink, an organic ink, an inorganic ink, a metallic paste, an organic paste, an inorganic paste, or any combination thereof. Examples of metals and metal alloys that may be suitable for use with the present invention include, but are not limited to, aluminum, chromium, copper, inconel alloys (nickel-chromium-molybdenum alloy with niobium), iron, magnesium, nickel, stainless steel, tin, titanium, tungsten, and any combination or alloy thereof.

Alternatively, the microwave energy interactive material may comprise a metal oxide. Examples of metal oxides that may be suitable for use with the present invention include, but are not limited to, oxides of aluminum, iron, and tin, used in conjunction with an electrically conductive material where needed. Another example of a metal oxide that may be suitable for use with the present invention is indium tin oxide (ITO). ITO can be used as a microwave energy interactive material to provide a heating effect, a shielding effect, a browning and/or crisping effect, or a combination thereof. For example, to form a susceptor, ITO may be sputtered onto a clear polymer film. The sputtering process typically occurs at a lower temperature than the evaporative deposition process used for metal deposition. ITO has a more uniform crystal structure and, therefore, is clear at most coating thicknesses. Additionally, ITO can be used for either heating or field management effects. INTO also may have fewer defects than metals, thereby making thick coatings of ITO more suitable for field management than thick coatings of metals, such as aluminum.

Alternatively still, the microwave energy interactive material may comprise a suitable electroconductive, semiconductive, or non-conductive artificial dielectric or ferroelectric. Artificial dielectrics comprise conductive, subdivided material in a polymeric or other suitable matrix or binder, and may include flakes of an electroconductive metal, for example, aluminum.

The various blanks and/or constructs contemplated hereby may be formed according to numerous processes known to those in the art, including using adhesive bonding, thermal bonding, ultrasonic bonding, mechanical stitching, or any other suitable process. Any of the various layers that may be used to form the structures and/or constructs of the invention may be provided as a sheet of material, a roll of material, a die cut material in the shape of the construct to be formed (e.g., a blank), or in any other suitable form.

The blank and/or construct may be formed from any suitable dimensionally stable material, for example, coated paperboard or a similar material. For example, the paperboard may have a basis weight of from about 60 to about 330 lbs/ream, for example, from about 80 to about 140 lbs/ream. The paperboard generally may have a thickness of from about 6 to about 30 mils, for example, from about 10 to about 28 mils. In one particular example, the paperboard has a thickness of about 12 mils. Any suitable paperboard may be used, for example, a solid bleached or solid unbleached sulfate board, such as SUS® board, commercially available from Graphic Packaging International.

The blank and/or construct can also be constructed of other materials, such as cardboard, hard paper, or any other material having properties suitable for enabling the package to function at least generally as described above. The blank and/or construct can also be laminated to or coated with one or more sheet-like materials at selected panels or panel sections.

Optionally, one or more portions, panels, or sections of the various blanks and/or constructs described herein or contemplated hereby may be coated with varnish, clay, or other materials, either alone or in combination. The coating may then be printed over with product advertising, graphics, or other information or indicia. The blanks and/or constructs also may be coated to protect any information printed thereon. Furthermore, the blanks and/or constructs may be coated with, for example, a moisture barrier layer, on either or both sides.

Alternatively or additionally, any of the blanks and/or constructs of the present invention may be coated or laminated with other materials to impart other properties, such as absorbency, repellency, opacity, color, printability, stiffness, or cushioning. For example, absorbent susceptors are described in U.S. Provisional Application No. 60/604,637, filed August 25, 2004, and U.S. Patent Application Publication No. US 2006/0049190 A1, published March 9, 2006.

Although certain embodiments of this invention have been described with a certain degree of particularity, those skilled in the art could make numerous alterations without departing from the spirit or scope of this invention. Any directional references (e.g., upper, lower, upward, downward, left, right, leftward, rightward, top, bottom, above, below, vertical, horizontal, clockwise, and counterclockwise) are used only for identification purposes to aid the reader's understanding of various embodiments, and do not create limitations, particularly as to the position, orientation, or use of the invention unless specifically set forth in the claims. Joinder references (e.g., joined, attached, coupled, connected, and the like) are to be construed broadly and may include intermediate members between a connection of elements and relative movement between elements. As such, joinder references do not necessarily imply that two elements are connected directly and in fixed relation to each other.

It will be understood that in each of the various blanks and packages contemplated hereby, a "fold line" can be any substantially linear, although not necessarily straight, form of weakening that facilitates folding therealong. More specifically, but not for the purpose of narrowing the scope of the present invention, a fold line may be a score line, such as lines formed with a blunt scoring knife, or the like, which creates a crushed portion in the material along the desired line of weakness, a cut that extends partially into a material along the desired line of weakness, and/or a series of cuts that extend partially into and/or completely through the material along the desired line of weakness, or any combination of these features.

For example, one type of conventional tear line is in the form of a series of cuts that extend completely through the material, with adjacent cuts being spaced apart slightly so that a nick (e.g., a small somewhat bridging-like piece of the material) is defined between the adjacent cuts for typically temporarily connecting the material across the tear line. The nicks are broken during tearing along the tear line. Such a tear line that includes nicks can also be referred to as a cut line, since the nicks typically are a relatively small percentage of the subject line, and alternatively the nicks can be omitted from such a cut line.

It will be recognized by those skilled in the art, that various elements discussed with reference to the various embodiments may be interchanged to create entirely new embodiments coming within the scope of the present invention. It is intended that all matter contained in the above description or shown in the accompanying drawings shall be interpreted as illustrative only and not limiting. Changes in detail or structure may be made without departing from the spirit of the invention. The detailed description set forth herein is not intended nor is to be construed to limit the present invention or otherwise to exclude any such other embodiments, adaptations, variations, modifications, and equivalent arrangements of the present invention.

Accordingly, it will be readily understood by those persons skilled in the art that, in view of the above detailed description of the invention, the present invention is susceptible of broad utility and application. Many adaptations of the present invention other than those herein described, as well as many variations, modifications, and equivalent arrangements will be apparent from or reasonably suggested by the present invention and the above detailed description thereof, without departing from the substance or scope of the present invention.

While the present invention is described herein in detail in relation to specific aspects, it is to be understood that this detailed description is only illustrative and exemplary of the present invention and is made merely for purposes of providing a full and enabling disclosure of the present invention and to set forth the best mode of practicing the invention known to the inventors at the time the invention was made. The detailed description set forth herein is not intended nor is to be construed to limit the present invention or otherwise to exclude any such other embodiments, adaptations, variations, modifications, and equivalent arrangements of the present invention.

## Claims

1. A microwave heating construct (100), comprising:
a top panel (108) and a bottom panel (110) opposite one another, the top panel including a plurality of cuts (118) that define a movable portion (116) of the top panel, wherein the movable portion includes microwave energy interactive material (104), the microwave energy interactive material being operative for converting at least a portion of impinging microwave energy into heat; and
a pair of side panels (112, 114) joined to the top panel and the bottom panel, wherein the pair of side panels, top panel, and bottom panel define an interior space (102);
**characterized in that** the construct includes a cross member (138) for extending at least partially across the movable portion of the top panel, the cross member being for urging the movable portion of the top panel toward the interior space.

2. The construct (100) of claim 1, wherein the cuts (118) that define the movable portion (116) of the top panel (108) are U-shaped.

3. The construct (100) of any of claim 1 or 2, wherein the movable portion (116) includes a plurality of score lines (124) for defining marks on a food item disposed within the interior space (102).

4. The construct (100) of any of claims 1 to 3, further comprising a pair of top end panels (126) joined to opposite ends of the top panel (108), wherein the top end panels each include an aperture (144) for engaging a pair of locking features (142) disposed at opposite ends of the cross member (138).

5. The construct (100) of claim 4, wherein the top panel (108) further includes a marginal portion (120) extending at least partially around the movable portion (116), wherein
in a first configuration, the movable portion substantially lies in a plane with the marginal portion of the top panel, and
in a second configuration with the locking features (142) engaging the respective apertures (144) in the top end panels (126), the movable portion is urged out the plane of the marginal portion.

6. The construct (100) of any of claims 1 to 5, further comprising a pair of bottom end panels (128) joined to opposite ends of the bottom panel (110), wherein the bottom end panels each include a locking projection (134) for engaging locking apertures (136) in at least one side panel of the pair of side panels (112, 114).

7. The construct (100) of claim 6, wherein when the locking projections (134) engage the locking apertures (136), the bottom end panels (128) extend upwardly from the bottom panel so that the bottom end panels are in a facing relationship with the interior space (102) of the construct (100).

8. The construct of any of claims 1 to 7, further comprising an access panel (156) defined by at least one line of disruption, wherein the access panel is in communication with the interior space (102).

9. The construct of claim 8, wherein
the pair of side panels (112, 114) includes a first side panel (112) and a second side panel (114), and
the at least one line of disruption comprises a pair of lines of disruption (158) in the first side panel extending divergently from the top panel (108) towards the bottom panel (110).

10. The construct (100) of claim 9, wherein
the pair of lines of disruption (158) of the first side panel (112) extending divergently from the top panel (108) towards the bottom panel (110) comprises a first line of disruption and a second line of disruption, and
the at least one line of disruption further comprises a third line of disruption (164) extending between opposite ends of the first side panel distal from the top panel and the bottom panel.

11. The construct (100) of claim 9, wherein
the pair of lines of disruption (158) of the first side panel (112) extending divergently from the top panel (108) towards the bottom panel (110) comprises a first line of disruption and a second line of disruption, and
the at least one line of disruption further comprises
a third line of disruption extending from the first line of disruption towards a first end of the first side panel, and
a fourth line of disruption extending from the second line of disruption towards a second end of the first side panel.

12. The construct (100) of any of claims 1 to 11, wherein the cross member (138) is separably joined to the bottom panel (110).

13. The construct (100) of any of claims 1 to 12, wherein at least one of the bottom panel (110) and the pair of side panels (112, 114) includes microwave energy interactive material operative for converting at least a portion of impinging microwave energy into heat.

14. The construct (100) of any of claims 1 to 13, in combination with a food item disposed within the interior space (102), the food item having a surface that is desirably at least one of browned and crisped, wherein the cross member (138) urges the microwave energy interactive material (104) of the movable portion (116) towards the surface of the food item.

15. A method of using the combination of claim 14, comprising exposing the food item within the interior space (102) to microwave energy, so that the microwave energy interactive material (104) of the movable portion (116) generates heat in response to the microwave energy and at least one of browns and crisps the surface of the food item.

## Patentansprüche

1. Mikrowellenheizvorrichtung (100) umfassend:
eine Deckwange (108) und eine Bodenwange (110), die einander gegenüberliegen, wobei die Deckwange mehrere Ausschnitte (118) umfasst, die einen bewegbaren Abschnitt (116) der Deckwange definieren, wobei der bewegbare Abschnitt mikrowellenenergieinteraktives Material (104) umfasst, wobei das mikrowellenenergieinteraktive Material wirksam ist, wenigstens einen Teil eindringender Mikrowellenenergie in Wärme umzuwandeln, und
ein Paar Seitenwangen (112, 114), die mit der Deckwange und der Bodenwange verbunden sind, wobei das Paar Seitenwangen, die Deckwange und die Bodenwange einen Innenraum (102) definieren,
**dadurch gekennzeichnet, dass** die Vorrichtung ein Querelement (138) umfasst, das sich wenigstens teilweise über den bewegbaren Abschnitt der Deckwange erstreckt, wobei das Querelement dazu dient, den bewegbaren Abschnitt der Deckwange in Richtung des Innenraums zu drängen.

2. Vorrichtung (100) nach Anspruch 1, wobei die Ausschnitte (118), die den bewegbaren Abschnitt (116) der Deckwange (108) definieren, U-förmig sind.

3. Vorrichtung (100) nach Anspruch 1 oder 2, wobei der bewegbare Abschnitt (116) mehrere Kerblinien (124) umfasst, um Markierungen auf einem Nahrungsmittelgegenstand, der in dem Innenraum (102) angeordnet ist, zu definieren.

4. Vorrichtung (100) nach einem der Ansprüche 1 bis 3, ferner umfassend ein Paar Deckendwangen (126), die mit gegenüberliegenden Enden der Deckwange (108) verbunden sind, wobei die Deckendwangen jeweils eine Öffnung (144) umfassen, um in ein Paar Verriegelungen (142) einzugreifen, die an gegenüberliegenden Enden des Querelements (138) angeordnet sind.

5. Vorrichtung (100) nach Anspruch 4, wobei die Deckwange (108) ferner einen Randabschnitt (120) umfasst, der sich wenigstens teilweise um den bewegbaren Abschnitt (116) herum erstreckt, wobei
in einer ersten Konfiguration der bewegbare Abschnitt im Wesentlichen in einer Ebene mit dem Randabschnitt der Deckwange liegt, und
in einer zweiten Konfiguration, in der die Verriegelungen (142) in die entsprechenden Öffnungen (144) in den Deckendwangen (126) eingreifen, der bewegbare Abschnitt aus der Ebene des Randabschnittes herausgedrängt wird.

6. Vorrichtung (100) nach einem der Ansprüche 1 bis 5, ferner umfassend ein Paar Bodenendwangen (128), die mit gegenüberliegenden Enden der Bodenwange (110) verbunden sind, wobei die Bodenendwangen jeweils einen Verriegelungsvorsprung (134) umfassen, um in Verriegelungsöffnungen (136) in wenigstens einer Seitenwange des Paares von Seitenwangen (112, 114) einzugreifen.

7. Vorrichtung (100) nach Anspruch 6, wobei, wenn die Sicherungsvorsprünge (134) in die Sicherungsöffnungen (136) eingreifen, die Bodenendwangen (128) sich aufwärts von der Bodenwange erstrecken, so dass die Bodenendwangen sich in einer dem Innenraum (102) der Vorrichtung (100) zugewandten Beziehung befinden.

8. Vorrichtung nach einem der Ansprüche 1 bis 7, ferner umfassend eine Zugangswange (156), die durch wenigstens eine Unterbrechungslinie definiert ist, wobei die Zugangswange sich in Kommunikation mit dem Innenraum (102) befindet.

9. Vorrichtung nach Anspruch 4, wobei
das Paar Seitenwangen (112, 114) eine erste Seitenwange (112) und eine zweite Seitenwange (114) umfasst, und
die wenigstens eine Unterbrechungslinie ein Paar von Unterbrechungslinien (158) in der ersten Seitenwange umfasst, die sich divergent von der Deckwange (108) in Richtung der Bodenwange (110) erstrecken.

10. Vorrichtung (100) nach Anspruch 9, wobei
das Paar von Unterbrechungslinien (158) der ersten Seitenwange (112), die sich divergent von der Deckwange (108) in Richtung der Bodenwange (110) erstrecken, eine erste Unterbrechungslinie und eine zweite Unterbrechungslinie umfassen, und
die wenigstens eine Unterbrechungslinie ferner eine dritte Unterbrechungslinie (164) umfasst, die sich zwischen gegenüberliegenden Enden der ersten Seitenwange distal von der Deckwange und der Bodenwange erstreckt.

11. Vorrichtung (100) nach Anspruch 9, wobei
das Paar von Unterbrechungslinien (158) der ersten Seitenwange (112), die sich divergent von der Deckwange (108) in Richtung der Bodenwange (110) erstrecken, eine erste Unterbrechungslinie und eine zweite Unterbrechungslinie umfassen, und
die wenigstens eine Unterbrechungslinie ferner umfasst
eine dritte Unterbrechungslinie, die sich von der ersten Unterbrechungslinie in Richtung eines ersten Endes der ersten Seitenwange erstreckt, und
eine vierte Unterbrechungslinie, die sich von der zweiten Unterbrechungslinie in Richtung eines zweiten Endes der ersten Seitenwange erstreckt.

12. Vorrichtung (100) nach einem der Ansprüche 1 bis 11, wobei das Querelement (138) trennbar mit der Bodenwange (110) verbunden ist.

13. Vorrichtung (100) nach einem der Ansprüche 1 bis 12, wobei wenigstens eine von der Bodenwange (110) und dem Paar Seitenwangen (112, 114) mikrowellenenergieinteraktives Material umfasst, das wirksam ist, wenigstens einen Teil eindringender Mikrowellenenergie in Wärme umzuwandeln.

14. Vorrichtung (100) nach einem der Ansprüche 1 bis 13, in Kombination mit einem Nahrungsmittelgegenstand, der im Innenraum (102) angeordnet ist, wobei der Nahrungsmittelgegenstand eine Oberfläche aufweist, die wünschenswerterweise zumindest gebräunt oder knusprig werden soll, wobei das Querelement (138) das mikrowellenenergieinteraktive Material (104) des bewegbaren Abschnittes (116) in Richtung der Oberfläche des Nahrungsmittelgegenstandes drängt.

15. Verfahren zum Verwenden der Kombination nach Anspruch 14, umfassend Aussetzen des Nahrungsmittelgegenstandes in dem Innenraum (102) Mikrowellenenergie, so dass das mikrowellenenergieinteraktive Material (104) des bewegbaren Abschnittes (116) als Reaktion auf die Mikrowellenergie Wärme erzeugt und die Oberfläche des Nahrungsmittelgegenstandes wenigstens bräunt oder knusprig macht.

## Revendications

1. Construction de chauffage par micro-ondes (100), comportant :
un panneau supérieur (108) et un panneau inférieur (110) opposés l'un à l'autre, le panneau supérieur comprenant une pluralité de découpes (118) qui définissent une partie mobile (116) du panneau supérieur, la partie mobile comprenant une matière interagissant avec l'énergie de micro-onde (104), la matière interagissant avec l'énergie de micro-onde agissant afin de convertir au moins une partie d'énergie de micro-onde qui la frappe en chaleur ; et
une paire de panneaux latéraux (112, 114) reliés au panneau supérieur et au panneau inférieur, la paire de panneaux latéraux, le panneau supérieur, et le panneau inférieur définissant un espace intérieur (102) ;
**caractérisée en ce que** la construction comprend un élément transversal (138) destiné à s'étendre au moins partiellement à travers la partie mobile du panneau supérieur, l'élément transversal étant destiné à pousser la partie mobile du panneau supérieur vers l'espace intérieur.

2. Construction (100) selon la revendication 1, dans laquelle les découpes (118) qui définissent la partie mobile (116) du panneau supérieur (108) sont en forme de U.

3. Construction (100) selon l'une quelconque des revendications 1 ou 2, dans laquelle la partie mobile (116) comprend une pluralité de lignes d'encoches (124) destinées à définir des marques sur un produit alimentaire disposé dans l'espace intérieur (102).

4. Construction (100) selon l'une quelconque des revendications 1 à 3, comportant en outre une paire de panneaux d'extrémité supérieure (126) reliés à des extrémités opposées du panneau supérieur (108), dans laquelle les panneaux d'extrémité supérieure comprennent une ouverture (144) destinée à engager une paire d'éléments de blocage (142) disposés au niveau d'extrémités opposées de l'élément transversal (138).

5. Construction (100) selon la revendication 4, dans laquelle le panneau supérieur (108) comprend en outre une partie marginale (120) s'étendant au moins partiellement autour de la partie mobile (116), dans laquelle
dans une première configuration, la partie mobile se situe sensiblement dans un plan avec la partie marginale du panneau supérieur, et
dans une deuxième configuration avec les éléments de blocage (142) engageant les ouvertures respectives (144) dans les panneaux d'extrémité supérieure (126), la partie mobile est poussée hors du plan de la partie marginale.

6. Construction (100) selon l'une quelconque des revendications 1 à 5, comportant en outre une paire de panneaux d'extrémité inférieure (128) reliés à des extrémités opposées du panneau inférieur (110), dans laquelle les panneaux d'extrémité inférieure comprennent chacun une saillie de blocage (134) destinée à engager des ouvertures de blocage (136) dans au moins un panneau latéral de la paire de panneaux latéraux (112, 114).

7. Construction (100) selon la revendication 6, dans laquelle, quand les saillies de blocage (134) engagent les ouvertures de blocage (136), les panneaux d'extrémité inférieure (128) s'étendent vers le haut du panneau inférieur de telle sorte que les panneaux d'extrémité inférieure sont en relation face à face avec l'espace intérieur (102) de la construction (100).

8. Construction selon l'une quelconque des revendications 1 à 7, comportant en outre un panneau d'accès (156) défini par au moins une ligne d'interruption, dans laquelle le panneau d'accès est en communication avec l'espace intérieur (102).

9. Construction selon la revendication 8, dans laquelle
la paire de panneaux latéraux (112, 114) comprend un premier panneau latéral (112) et un deuxième panneau latéral (114), et
la au moins une ligne d'interruption comporte une paire de lignes d'interruption (158) dans le premier panneau latéral s'étendant de manière divergente depuis le panneau supérieur (108) vers le panneau inférieur (110).

10. Construction (100) selon la revendication 9, dans laquelle
la paire de lignes d'interruption (158) du premier panneau latéral (112) s'étendant de manière divergente depuis le panneau supérieur (108) vers le panneau inférieur (110) comporte une première ligne d'interruption et une deuxième ligne d'interruption, et
la au moins une ligne d'interruption comporte en outre une troisième ligne d'interruption (164) s'étendant entre des extrémités opposées du premier panneau latéral distantes du panneau supérieur et du panneau inférieur.

11. Construction (100) selon la revendication 9, dans laquelle
la paire de lignes d'interruption (158) du premier panneau latéral (112) s'étendant de manière divergente depuis le panneau supérieur (108) vers le panneau inférieur (110) comporte une première ligne d'interruption et une deuxième ligne d'interruption, et
la au moins une ligne d'interruption comporte en outre
une troisième ligne d'interruption s'étendant depuis la première ligne d'interruption vers une première extrémité du premier panneau latéral, et
une quatrième ligne d'interruption s'étendant depuis la deuxième ligne d'interruption vers une deuxième extrémité du premier panneau latéral.

12. Construction (100) selon l'une quelconque des revendications 1 à 11, dans laquelle l'élément transversal (138) est relié de manière séparable du panneau inférieur (110).

13. Construction (100) selon l'une quelconque des revendications 1 à 12, dans laquelle au moins un du panneau inférieur (110) et de la paire de panneaux latéraux (112, 114) comprend une matière interagissant avec l'énergie de micro-onde agissant afin de convertir au moins une partie d'énergie de micro-onde qui la frappe en chaleur.

14. Construction (100) selon l'une quelconque des revendications 1 à 13, en combinaison avec un produit alimentaire disposé dans l'espace intérieur (102), le produit alimentaire ayant une surface que l'on souhaite au moins dorée ou croustillante, dans laquelle l'élément transversal (138) pousse la matière interagissant avec l'énergie de micro-onde (104) de la partie mobile (116) vers la surface du produit alimentaire.

15. Procédé d'utilisation de la combinaison de la revendication 14, comportant le fait d'exposer le produit alimentaire dans l'espace intérieur (102) à l'énergie de micro-onde, de telle sorte que la matière interagissant avec l'énergie de micro-onde (104) de la partie mobile (116) génère de la chaleur en réponse à l'énergie de micro-onde et au moins dore ou rend croustillante la surface du produit alimentaire.
